# FASCICULE DE BREVET EUROPEEN

(11) **EP 3 681 744 B1**
(45) Date de publication et mention de la délivrance du brevet: **01.12.2021**
(21) Numéro de dépôt: 18766312.5
(22) Date de dépôt: 27.07.2018
(51) Int. Cl.: B60H 3/02, B05B 7/06

(54) **SYSTEME DE NEBULISATION POUR VEHICULE AUTOMOBILE**
ZERSTÄUBERSYSTEM FÜR EIN KRAFTFAHRZEUG
NEBULIZER SYSTEM FOR A MOTOR VEHICLE

(30) Priorité: 11.09.2017 FR 1758381
(43) Date de publication de la demande: 22.07.2020
(73) Titulaire: Valeo Systemes Thermiques, 78322 Le Mesnil Saint-Denis (FR)
(72) Inventeur: DECORDE, Nicolas, 06130 Grasse (FR); GSCHWIND, Michel, 06130 Grasse (FR); RICHARD, Frédéric, 06130 Grasse (FR); PETIT, Stéphane, 78322 Le Mesnil Saint-denis Cedex (FR); ROUSSEAU, Yves, 78322 Le Mesnil Saint-denis Cedex (FR); FEUILLARD, Vincent, 78322 Le Mesnil Saint-denis Cedex (FR)
(74) Mandataire: Valeo Systèmes Thermiques
(86) Numéro de dépôt international: PCT/FR2018/051943
(87) Numéro de publication internationale: WO 2019/048748

(56) Documents cités:
- WO-A1-2016/009127
- WO-A1-2017/103548
- FR-A1- 2 929 520

## Description

L'invention concerne un système de nébulisation pour véhicule automobile.

Elle concerne plus particulièrement un système de nébulisation comprenant au moins un réservoir pour un liquide, une enceinte de nébulisation, ladite enceinte de nébulisation comportant une buse de nébulisation munie d'un dispositif d'émission d'ondes acoustiques transmises dans le liquide et configuré de sorte que la surface du liquide issu du réservoir génère un brouillard de gouttelettes du liquide, le brouillard étant destiné à pénétrer dans un habitacle du véhicule automobile, et, un système de filtration apte à filtrer le liquide contenu dans le réservoir avant son passage dans l'enceinte de nébulisation.

Un tel système de nébulisation permet de rafraichir et/ou d'humidifier un flux d'air dans lequel le brouillard de gouttelettes est nébulisé.

Dans un habitacle d'un véhicule automobile, il n'est pas rare que les usagers du véhicule souffrent de la chaleur dans l'habitacle, et, en particulier, les passagers arrière, dont la position est la plus éloignée des aérateurs en liaison avec un dispositif de ventilation, de chauffage et/ou de climatisation de ce véhicule.

De ce fait, il est intéressant de recourir à un système de nébulisation, car le brouillard de gouttelettes rafraichit rapidement l'air de l'habitacle, assurant une sensation de froid immédiate.

Un système de nébulisation pour véhicule automobile d'un type connu est divulgué par les documents WO 2017/103548 A1, FR 2 929 520 A1, et WO 2016/009127 A1. Toutefois, les systèmes existants ne permettent pas d'avoir une vitesse homogène d'air autour de la buse de nébulisation ce qui diminue la quantité de brouillard envoyé vers l'habitacle du véhicule automobile.

L'invention vise à améliorer la situation.

A ce titre, elle propose un système de nébulisation suivant les caractéristiques de la revendication 1, dans lequel le système de nébulisation comporte un module d'entrée pour l'air, ledit module d'entrée pour l'air comportant au moins une volute d'injection d'air apte à canaliser l'air en direction du volume intérieur de ladite enceinte de nébulisation, ladite volute d'injection d'air présentant une forme de spirale s'enroulant autour de ladite enceinte de nébulisation.

Ainsi, grâce à la volute d'injection d'air, il est possible d'avoir un flux d'air de vitesse homogène au niveau de l'enceinte de nébulisation.

D'autres modes de réalisation particuliers de l'invention proposent que :
- ladite volute d'injection d'air est propre à être appliquée contre une ouverture de ladite enceinte de nébulisation,
- ledit module d'entrée pour l'air est assujetti à ladite enceinte de nébulisation,
- ledit module d'entrée pour l'air comporte au moins un support pour un ventilateur de mise en mouvement de l'air,
- ledit module d'entrée pour l'air comporte un filtre pour l'air,
- ledit ventilateur et/ou ledit filtre pour l'air sont disposés selon une direction d'extension perpendiculaire à un axe longitudinal de ladite enceinte de nébulisation et sur un coté du système de nébulisation,
- ledit réservoir pour le liquide comporte une forme permettant d'accueillir au moins en partie ledit module d'entrée pour l'air.
- le réservoir pour le liquide est de forme parallélépipédique.
- le réservoir pour le liquide est interposé au moins en partie entre l'enceinte de nébulisation et le système de filtration.
- ledit réservoir pour le liquide comporte au moins une face dite inférieure est inclinée par rapport à une face opposée dite supérieure, l'angle d'inclinaison entre ladite face inférieure inclinée et ladite face opposée supérieure étant de préférence compris entre 10 et 20°,
- ledit réservoir pour le liquide comporte au moins une face dite inférieure est inclinée par rapport à une face opposée dite supérieure, l'angle d'inclinaison entre ladite face inférieure inclinée et ladite face opposée supérieure étant de préférence compris entre 10 et 20°,
- ladite face inférieure inclinée comporte au moins un moyen de rétention dudit ledit système de filtration,
- ladite face inférieure inclinée comporte une excroissance disposée à une extrémité dite inférieure de ladite face inférieure inclinée, ladite excroissance étant apte à être assujettie à au moins une pompe du circuit hydraulique du système de nébulisation,
- ladite excroissance comporte une première protubérance présentant un axe d'extension principal sensiblement parallèle à une face dite latérale du réservoir pour le liquide et étant apte à être assujettie à une pompe de vidange du circuit hydraulique du système de nébulisation,
- ladite excroissance comporte une seconde protubérance présentant un axe d'extension principal sensiblement parallèle à face opposée supérieure du réservoir pour le liquide et étant apte à être assujettie à pompe de mise en mouvement du liquide du circuit hydraulique du système de nébulisation,
- ladite excroissance est en outre disposée, par exemple de manière sensiblement centrale par rapport à l'axe d'extension longitudinal du système de nébulisation, de manière à créer deux dégagements de part et d'autres de cette dernière,
- ledit réservoir pour le liquide est réalisé en au moins deux parties dont une partie formant couvercle et comportant au moins un moyen de positionnement pour ladite enceinte de nébulisation,
- ledit réservoir pour le liquide comporte un décrochement permettant d'accueillir au moins en partie un module d'entrée pour l'air dudit système de nébulisation,
- ledit système de filtration est disposé de manière incliné par rapport un axe longitudinal de ladite enceinte de nébulisation et par rapport à la face opposée supérieure du réservoir pour le liquide,
- ledit système de nébulisation comporte un circuit d'amorçage,
- ledit système de nébulisation comporte un circuit de vidange,
- ledit système de nébulisation comporte un circuit de remplissage, et,
- ledit système de nébulisation comporte une électronique de commande et de contrôle tel que des capteurs, des actionneurs, et/ou une interface homme-machine.

L'invention concerne aussi un dispositif de ventilation, chauffage et/ou climatisation pour véhicule automobile et /ou un véhicule automobile comprenant un système de nébulisation tel que précédemment décrit.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue en perspective d'un système de nébulisation selon un mode de réalisation où le système de nébulisation est intégré dans une console centrale d'un véhicule automobile partiellement représentée,
- la figure 2 illustre une vue en perspective partielle et en coupe d'un système de nébulisation selon l'invention et présentant de manière schématique une partie des circuits aéraulique et hydraulique du système de nébulisation,

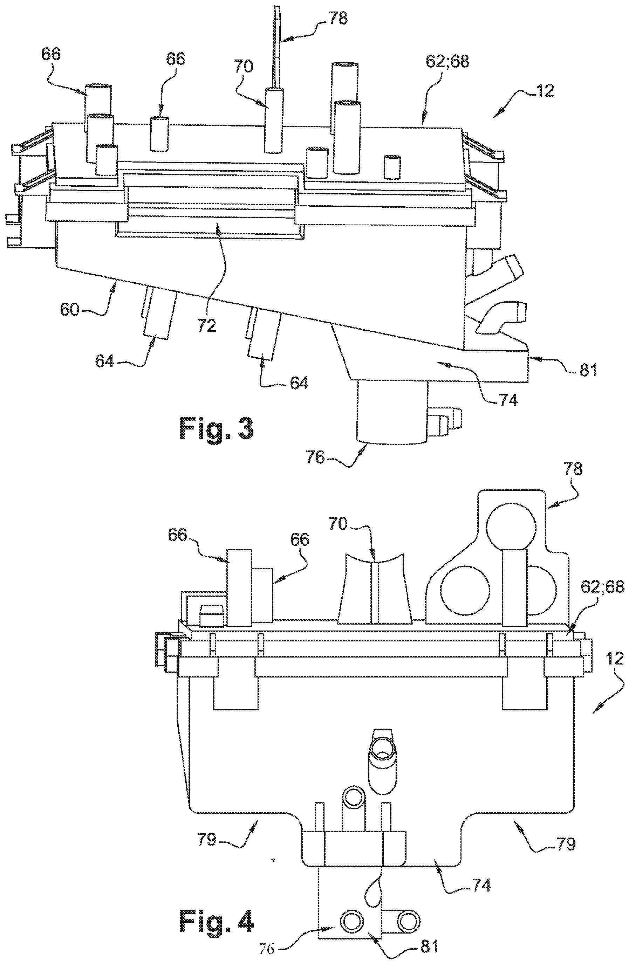

- la figure 3 illustre une vue en perspective d'un réservoir de liquide d'un système de nébulisation selon la présente invention, et,
- la figure 4 illustre une vue de face du réservoir de liquide d'un système de nébulisation de la figure 3.

L'invention concerne un système de nébulisation 10 comportant au moins un réservoir 12 pour un liquide, une enceinte de nébulisation 14 et un système de filtration 16.

Le liquide contenu dans le réservoir pourra, par exemple, être de l'eau.

Le système de filtration 16 est apte à filtrer le liquide contenu dans le réservoir 12 pour ce dernier avant son passage dans l'enceinte de nébulisation 14. Le système de filtration 16 est apte à filtrer le liquide contenu dans le réservoir 12 et pourra, par exemple, former une barrière anti-bactérienne.

Dans cet exemple, le système de filtration 16 est disposé de manière fluidique entre le réservoir 12 pour le liquide et l'enceinte de nébulisation 14.

L'enceinte de nébulisation 14 est réalisée, ici, sous la forme d'un corps creux allongé s'étendant selon un axe longitudinal A.

Dans le mode de réalisation illustré aux figures, l'axe longitudinal A est horizontal.

L'enceinte de nébulisation 14 comporte au moins deux parties disposées, ici, l'une à la suite de l'autre selon la direction de l'axe longitudinal A, à savoir une chambre de nébulisation 20 et une cheminée de nébulisation 18. En d'autres termes, la chambre de nébulisation 20 et la cheminée de nébulisation 18 sont coaxiales.

Dans le mode de réalisation illustré ici, la chambre de nébulisation 20 présente une plus grande section transversale que celle de la cheminée de nébulisation 18. Dans cet exemple, la chambre de nébulisation 18 se prolonge au moins en partie à l'intérieur de la chambre de nébulisation 20.

Dans l'exemple de réalisation illustré ici, la cheminée de nébulisation 18 et la chambre de nébulisation 20 sont de forme cylindrique de section globalement circulaire, concentriques et s'étendent tous deux selon l'axe longitudinal, ici horizontal.

L'enceinte de nébulisation 14 comporte une buse de nébulisation 22 munie d'un dispositif d'émission d'ondes acoustiques transmises dans le liquide configuré de sorte que la surface du liquide issu du réservoir 12 pour ce dernier génère un brouillard de gouttelettes du liquide, ce brouillard étant destiné à pénétrer dans un habitacle du véhicule automobile.

L'axe longitudinal de la buse de nébulisation 22 est sensiblement parallèle à l'axe longitudinal A de l'enceinte de nébulisation 14, à savoir qu'il est horizontal dans le mode de réalisation de l'invention illustré.

La buse de nébulisation 22 est disposée au moins en partie à l'intérieur de l'enceinte de nébulisation 14 et, en particulier, dans la chambre de nébulisation 20. L'insertion de la buse de nébulisation 22 pourra s'effectuer par l'intermédiaire d'une ouverture (non représentée) avec, au besoin, interposition d'un joint (lui aussi non représenté).

La buse de nébulisation 22 comporte une paroi latérale délimitant un volume intérieur apte à contenir le liquide à nébuliser. La section transversale intérieure de cette paroi latérale présente un rétrécissement progressif en direction d'un orifice de sortie pour le liquide 24. Le rétrécissement progressif permet de former un concentrateur d'ondes acoustiques.

Un élément (céramique) piézo-électrique est disposé à l'opposé de l'orifice de sortie 24 pour le liquide.

L'élément piézo-électrique est apte à émettre des ondes acoustiques dans le liquide à pulvériser ce qui permet de générer un brouillard de gouttelettes de liquide lorsque la buse de nébulisation 22 est remplie par ce dernier et lorsque l'élément piézo-électrique émet des ondes acoustiques de fréquence et d'intensité appropriées. De manière préférentielle, l'élément piézo-électrique pourra émettre des ultrasons dont la fréquence sera comprise entre 1 MHz et 3 MHz, notamment entre 1,7 MHz et 2,4 MHz.

L'élément piézoélectrique est, par exemple, un quartz.

Par exemple, le diamètre des gouttelettes contenues dans le brouillard est inférieur à 10 µm.

La buse de nébulisation 22 comporte aussi au moins un orifice d'admission 23 pour le liquide à nébuliser qui permet l'introduction du liquide à nébuliser dans le volume intérieur de la buse.

Dans un exemple particulier, une pluralité d'orifices d'admission 23, par exemple quatre, pour le liquide sont prévus autour de l'axe longitudinal de la buse de nébulisation 22, dans une zone proche de l'élément piézo-électrique.

Il peut aussi être prévu au moins un moyen de détection du manque de liquide. Le moyen de détection du manque de liquide pourra, par exemple, être un capteur de niveau.

Le système de nébulisation 10 comporte en outre un module d'entrée 26 pour l'air, ce module d'entrée 26 pour l'air étant assujetti à l'enceinte de nébulisation 14. Le module d'entrée 26 pour l'air pourra être assujetti par tout moyen d'asservissement connu de l'homme du métier.

Le module d'entrée 26 pour l'air est, dans cet exemple, fixé, notamment de manière amovible, à la chambre de nébulisation 20.

Le module d'entrée 26 pour l'air comporte au moins un support pour un ventilateur de mise en mouvement de l'air.

Le module d'entrée 26 pour l'air comporte en outre un filtre 28 pour l'air qui pourra, par exemple, être disposé en entrée du ventilateur, et encore par exemple, disposé sur ce dernier. Le filtre pour l'air 28 pourra, par exemple, comporter des pores de dimensions de 0.2 µm au minimum.

A titre d'exemple non représenté, le système de nébulisation 10 pourra comporter un déflecteur apte à diriger l'air vers le module d'entrée 26 pour l'air et donc vers le système de nébulisation 10.

Il pourra aussi être prévu une grille disposée sur le filtre 28 pour l'air apte à protéger ce filtre.

On pourra remarquer que le ventilateur et le filtre 28 pour l'air sont, ici, disposés selon une direction d'extension perpendiculaire à l'axe longitudinal A de l'enceinte de nébulisation 14 et sur un coté du système de nébulisation 10. Ici, le ventilateur et le filtre 28 pour l'air sont disposés à proximité d'un conduit de sortie du brouillard 34 qui sera décrit plus loin. Une telle disposition est avantageuse en ce qu'elle est compacte et permet, en outre, de protéger le filtre en cas de chute d'éléments. En effet, en cas de chute d'éléments, ces derniers tomberont sur le cadre du filtre 28 pour l'air et non sur le média filtrant de ce dernier.

Un mode de réalisation non illustré propose que soit le ventilateur soit le filtre 28 pour l'air soient disposés selon une direction d'extension perpendiculaire à l'axe longitudinal A de l'enceinte de nébulisation 14 et sur un coté du système de nébulisation 10.

A cet effet, le réservoir 12 pour le liquide comporte un décroché ou une forme permettant d'accueillir au moins en partie le module d'entrée 26 pour l'air et, en particulier, le ventilateur et/ou le filtre 28 pour l'air.

Selon l'invention, le module d'entrée 26 pour l'air comporte aussi une volute d'injection d'air 30 qui permet de canaliser l'air provenant du ventilateur, en direction du volume intérieur de l'enceinte de nébulisation 14. En particulier, la volute d'injection d'air 30 permet de faire tournoyer l'air autour de la cheminée de nébulisation 18 tout en dirigeant cet air vers et autour de la buse de nébulisation 22.

Un mode de réalisation propose que la volute d'injection d'air 30 présente une forme de demi-cercle en vue de face.

La volute d'injection d'air 30 est propre à être appliqué contre l'enceinte de nébulisation 14 et, en particulier, contre la chambre de nébulisation 20 au niveau d'une ouverture (non représentée) dite ouverture d'entrée d'air, avec, au besoin, interposition de moyens d'étanchéité non représentés.

La forme de la volute d'injection d'air 30 pourra aussi présenter une forme de spirale s'enroulant autour de l'enceinte de nébulisation 14 ce qui permet d'obtenir un effet de rotation de l'air en spirale autour de l'enceinte de nébulisation 14 de manière à l'alimenter de manière encore plus efficace. Une telle forme permet d'avoir un flux d'air de vitesse homogène autour de la buse de nébulisation 22 au moins dans la direction de l'axe longitudinal A.

Dans l'exemple illustré ici, le système de nébulisation 10 comporte des moyens de redirection 32, permettant de modifier la direction d'écoulement de l'air depuis la volute d'injection d'air 30 vers le voisinage de la buse de nébulisation 22. De tels moyens permettent, dans l'exemple illustré ici, de rediriger l'air autour de la buse de nébulisation et parallèlement au jet de liquide qui sort de cette dernière.

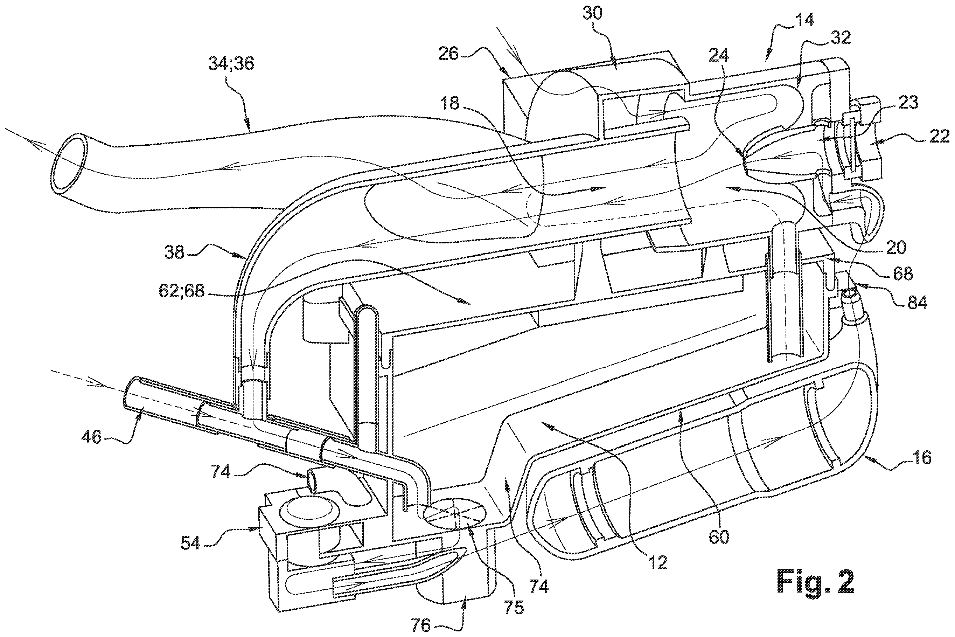

En d'autres termes et comme illustré à la figure 2, l'air entre dans le système de nébulisation 10 par l'intermédiaire du module d'entrée 26 pour l'air et, en particulier, par le filtre 28 pour l'air puis traverse le ventilateur. L'air circule dans cette phase de son trajet de manière perpendiculaire à l'axe longitudinal A de l'enceinte de nébulisation 14.

Par la suite, l'air arrive dans la volute d'injection 30 avant de pénétrer dans l'enceinte de nébulisation 14 au niveau de la chambre de nébulisation 20. La volute d'injection 30 permet l'introduction de l'air dans la chambre de nébulisation 20 de manière, là aussi perpendiculaire à l'axe longitudinal A de l'enceinte de nébulisation 14.

L'air introduit dans la chambre de nébulisation 20 se dirige ensuite de manière parallèle à l'axe longitudinal A de l'enceinte de nébulisation 14 et à contre-courant de la direction prise par le liquide nébulisé par la buse de nébulisation 22 et ceci jusqu'à buter contre les moyens de redirection 32.

Les moyens de redirection 32 orientent ensuite l'air de manière sensiblement parallèle (co-courante) à la direction prise par le liquide nébulisé dans la buse de nébulisation 22.

Le mélange entre l'air et le liquide nébulisé se produit dans l'enceinte de nébulisation 14, en particulier dans la chambre de nébulisation 20. Ainsi, l'air contribue à expulser le brouillard du système de nébulisation 10.

Le système de nébulisation 10 comporte en outre au moins un conduit de sortie du brouillard 34 ou 36.

Ici, le conduit de sortie du brouillard 34 ou 36 est disposée au niveau de l'enceinte de nébulisation 14 et, en particulier, dans la partie cheminée de nébulisation 18 de cette dernière et dans sa partie distale de la buse de nébulisation 22.

Dans les modes de réalisation de l'invention illustrés ici, le système de nébulisation 10 comporte deux conduits de sortie du brouillard 34 et 36.

Chacun des conduits de sortie du brouillard 34 et 36 s'étend ici jusqu'à un orifice terminal mis en relation fluidique avec au moins un aérateur 48 du véhicule automobile et ainsi l'habitacle de ce même véhicule.

Dans le mode de réalisation illustré ici, et à titre d'exemple, chacun des conduits de sortie du brouillard 34 et 36 diverge latéralement de l'enceinte de nébulisation 14 selon un angle d'environ 55° avec l'axe longitudinal A et avec le jet de liquide sortant de la buse de nébulisation 22. Les axes d'extension généraux des deux conduits de sortie du brouillard 34 et 36 forment un angle d'environ 110° à 130° entre eux.

Il est possible de prévoir que l'un au moins des conduits de sortie du brouillard 34 ou 36 soit muni d'un volet permettant de commander un débit de brouillard.

La cheminée de nébulisation 18 se prolonge après sa jonction avec les conduits de sortie du brouillard 34 et 36 par un tube dit d'évacuation du liquide non nébulisé 38.

Le tube d'évacuation du liquide non nébulisé 38 est destiné à l'écoulement du liquide non nébulisé auquel est éventuellement mélangée une fraction de gouttes de grande taille. On entend par gouttes de grandes tailles, des gouttes de diamètre supérieur à 10 µm.

Le tube d'évacuation du liquide non nébulisé 38 se prolonge ici par une portion terminale dont la section de passage décroit, de préférence de manière continue, en direction d'un orifice terminal 44.

L'orifice terminal 44 est, ici, mis en communication avec une conduite de remplissage 46 du système de nébulisation 10.

La conduite de remplissage 46 du système de nébulisation 10 comporte aussi une entrée 50 par laquelle le système de nébulisation 10 est approvisionné en liquide.

Un mode de réalisation propose qu'un embout 52 présentant une forme évasée ou d'entonnoir soit adapté sur la conduite de remplissage 46. La forme en entonnoir permet de mieux diriger le liquide vers le réservoir 12 pour le liquide. En outre, cette forme est aussi avantageuse en ce qu'elle permet de loger différents éléments comme un pré-filtre.

Dans un exemple de réalisation non représenté, l'embout 52 comporte un filtre dit pré-filtre pour le liquide à nébuliser ce qui permet d'éliminer des particules de gros diamètre dans le liquide, en particulier lors du remplissage du réservoir 12 pour le liquide.

Le pré-filtre retient avantageusement des particules dont le diamètre est supérieur à 30 µm et de préférence entre 50 et 200 µm et ceci de manière à retenir des particules telles que des grains de sable, par exemple. Ce pré-filtre pourra être démontable de manière pouvoir être changé périodiquement.

L'embout 52 et la conduite de remplissage 46 font, ici, partie du circuit de remplissage du système de nébulisation 10.

Le remplissage en liquide (en particulier par de l'eau) du système de nébulisation 10 selon l'invention pourra se faire par l'intermédiaire d'une trappe accessible par un passager arrière du véhicule automobile équipé du système de nébulisation 10.

Il est aussi possible que le système de nébulisation 10 comporte un indicateur de visualisation du niveau de remplissage du réservoir. Un mode de réalisation propose que ce dernier soit disposé au niveau de la console centrale 100 du véhicule automobile.

Le système de nébulisation 10 pour véhicule automobile comporte comme indiqué plus haut un réservoir 12 pour le liquide.

Le réservoir 12 pour le liquide comporte une forme présentant une moins une paroi inclinée par rapport à une paroi située en vis-à-vis de cette paroi inclinée.

Dans le mode de réalisation illustré ici, le réservoir 12 pour le liquide comporte 6 faces dont au moins une face dite inférieure 60, une face dite supérieure 62 et quatre faces latérales. En d'autres termes, au moins deux faces latérales situées en vis-à-vis sont de dimensions différentes, et, en particulier de hauteur différentes.

La face (ou paroi) inférieure 60 est inclinée par rapport à une face opposée supérieure 62 et présente une longueur et une largeur.

Un mode de réalisation particulier propose que l'angle d'inclinaison entre la face inférieure inclinée 60 et la face opposée supérieure 62 soit de préférence compris entre 10 et 20°.

Ici, l'angle d'inclinaison entre la face inférieure inclinée 60 et l'axe longitudinal A est de préférence compris entre 10 et 20°.

La face inférieure inclinée 60 du réservoir 12 pour le liquide comporte au moins un moyen de rétention 64 pour le système de filtration 16.

Dans les modes de réalisation illustrés ici, deux moyens de rétention 64 pour le système de filtration 16 sont prévus et sont réalisés sous la forme de demi-anneaux aptes à enserrer le système de filtration 16, ici, réalisé sous une forme cylindrique.

Ainsi, la face inférieure inclinée 60 maintient le système de filtration 16 dans une orientation elle aussi inclinée. En d'autres termes, le système de filtration 16 est disposé de manière incliné par rapport l'axe longitudinal A de l'enceinte de nébulisation 14. En d'autres termes encore, le système de filtration 16 est disposé de manière incliné par rapport à la face opposée supérieure 30 du réservoir 12 pour le liquide. Un tel agencement est avantageux en ce qu'il n'y a pas point de rétention d'eau dans le système de nébulisation 10, ce qui facilite la vidange du système de nébulisation 10 selon la présente invention. De plus, cet agencement permet de ne pas déjauger le système de nébulisation quand le véhicule automobile est en fonctionnement et quelque soit sa dynamique.

Selon un mode de réalisation particulier de l'invention, la face inférieure inclinée 60 comporte une excroissance 74 disposée à une extrémité dite inférieure de ladite face inférieure inclinée 60.

L'excroissance 74 est apte à être assujettie, par tout moyen d'asservissement connu de l'homme du métier à au moins un élément du circuit hydraulique du système de nébulisation 10 tel que par exemple une pompe.

L'excroissance 74 comporte une première protubérance 76 présentant un axe d'extension principal sensiblement parallèle à une face dite latérale du réservoir 12 pour le liquide et est apte à être assujettie, par tout moyen d'asservissement connu de l'homme du métier à une pompe (ou vanne) de vidange 54 du circuit hydraulique du système de nébulisation 10.

Un mode de réalisation propose que qu'une crépine d'aspiration 75 soit prévue à l'interface l'excroissance 74 et la première protubérance 76. Cette crépine d'aspiration a pour fonction de stopper les éventuelles particules circulant dans le circuit hydraulique du système de nébulisation 10. La crépine d'aspiration pourra, par exemple, comporter des pores compris entre 10 et 30 µm et de préférence 20 µm.

L'excroissance 74 comporte en outre une seconde protubérance 81 présentant un axe d'extension principal sensiblement parallèle à la face opposée supérieure 62 du réservoir 12 pour le liquide et est apte à être assujettie, par tout moyen d'asservissement connu de l'homme du métier, à pompe 56 de mise en mouvement du liquide du circuit hydraulique du système de nébulisation 10.

Dans les modes de réalisation représentés, l'excroissance 74 est disposée, ici, par exemple de manière sensiblement centrale, sur la largeur de la face inférieure inclinée 60 et ceci de manière à créer deux dégagements 79 de part et d'autre de cette excroissance 74.

De manière préférentielle, le système de filtration 16 est disposé en vis-à-vis de et/ou dans le prolongement de l'excroissance 74.

Une telle disposition est avantageuse en ce que deux dégagements 79 sont ainsi créés. Les deux dégagements 79 forment chacun un passage dans lequel il est possible disposer d'autres éléments du véhicule automobile tels que, par exemple, des conduits pour de l'air.

Dans un mode de réalisation particulier, le réservoir 12 pour le liquide est réalisé en au moins deux parties dont une partie formant un couvercle 68 et comportant au moins un moyen de positionnement 66 pour l'enceinte de nébulisation 14.

Ici, le couvercle 68 correspond à la face opposée supérieure 62 et s'étend selon un plan sensiblement horizontal.

Le moyen de positionnement 66 pour l'enceinte de nébulisation 14 pourra être réalisé sous la forme d'un fût cylindrique comportant une ouverture dans sa partie centrale apte à recevoir un moyen complémentaire disposé en vis-à-vis sur l'enceinte de nébulisation 14.

Un mode de réalisation particulier propose que le moyen de positionnement 66 soit muni de nervures de renfort de manière à supporter le poids de l'enceinte de nébulisation 14.

Dans un autre mode de réalisation particulier, le réservoir 12 pour le liquide et, en particulier, le couvercle 68 comporte une plaque 78 munie d'ouvertures pour le passage de connecteurs électriques.

Dans encore un autre mode de réalisation particulier, le réservoir 12 pour le liquide et, en particulier, le couvercle 68 comporte un moyen soutien 70 pour l'enceinte de nébulisation 14 et en particulier la partie cheminée de nébulisation 18 de cette dernière.

Le réservoir 12 pour le liquide comporte en outre un décrochement 72 permettant d'accueillir au moins en partie le module d'entrée 26 pour l'air du système de nébulisation 10.

Le système de nébulisation 10 comporte un circuit d'amorçage 80 muni d'une vanne de dérivation 82.

Dans un mode de réalisation, le circuit d'amorçage 80 est placé entre la pompe 56 de mise en mouvement du liquide et le réservoir 12 pour le liquide. Il permet, lorsque le système de nébulisation 10 est en mode d'amorçage, de réamorcer la pompe 56 de mise en mouvement du liquide avant de forcer le brouillard dans l'habitacle. En effet, après un certain temps non utilisée, celle-ci peut perdre de la pression et ne plus être à même de fonctionner correctement. Une telle caractéristique a un impact sur les gouttelettes formées et donc ultimement du confort de l'usager. Le circuit d'amorçage 80 permet de remédier à un tel inconvénient en réinstaurant la pression de fonctionnement de la pompe 56 de mise en mouvement du liquide avant d'injecter les gouttelettes dans l'habitacle.

Le système de nébulisation 10 comprend aussi un circuit de transfert 84 du liquide depuis le réservoir 12 pour le liquide jusqu'à la buse de nébulisation 22.

Le circuit de transfert du liquide est composé d'un circuit principal entre le réservoir 12 pour le liquide et la buse de nébulisation 22 et d'un circuit de vidange comportant, ici, un organe de vidange 54.

L'organe de vidange 54 pourra être, par exemple, une vanne deux voies permettant de fermer ou ouvrir ledit circuit hydraulique du système de nébulisation 10.

Le circuit de vidange permet d'évacuer l'eau hors du système de nébulisation 10. La vidange s'effectue par gravité, par exemple périodiquement et de préférence tous les mois ou périodiquement en cas de gel du liquide dans le système de nébulisation 10.

Comme vu précédemment, le système de nébulisation 10 comporte aussi une pompe 56 de mise en mouvement du liquide.

Dans les modes de réalisations représentés, la pompe 56 de mise en mouvement du liquide est reliée de manière fluidique au réservoir 12 pour le liquide et ceci par l'intermédiaire d'une canalisation.

Le réservoir 12 pour le liquide est interposé au moins en partie entre l'enceinte de nébulisation 14 et le système de filtration 16.

L'interposition du réservoir 12 pour le liquide entre l'enceinte de nébulisation 14 et le système de filtration 16 est ici spatiale.

Grâce à une telle disposition spatiale, il est possible de réduire l'encombrement du système de nébulisation selon la présente invention.

En outre, la présente invention permet un système de filtration immergé, c'est-à-dire sous le niveau du liquide du réservoir pour ce dernier, ce qui facilite l'amorçage du système de nébulisation lorsque qu'il est mis en marche.

Le système de filtration 16 comprend au moins un filtre muni d'une membrane pourvue de pores inférieurs à 50 µm, et de préférence inférieurs à 20 µm.

Le système de filtration 16 pourra par exemple comprendre deux filtres ou un nombre supérieur suivant à la fois le degré de purification souhaité et la provenance de l'eau.

Ici, le système de filtration comporte une enveloppe de forme sensiblement cylindrique. D'autres modes de réalisation proposent que le filtre soit de forme rectangulaire ou carrée.

Le système de filtration 16 est placé en amont de la buse de nébulisation 22 générant le brouillard et en aval de la pompe 56 de mise en mouvement du liquide relativement à la direction d'écoulement du liquide à nébuliser dans le circuit.

Le système de filtration 16 assure que le liquide nébulisé et, en particulier, l'eau nébulisée dans le brouillard soit saine pour les usagers du véhicule. Ceci est d'autant plus important quand les gouttelettes présentent un diamètre inférieur à 10 µm, auquel cas elles pénètrent jusque dans les poumons des usagers du véhicule.

Le système de nébulisation 10 pourra aussi comprendre un adoucisseur d'eau permettant de façon connue de réduire la dureté de l'eau par réduction de la quantité de calcaire, et augmente de ce fait la durée de vie du système.

L'adoucisseur d'eau pourra être, par exemple, installé dans le réservoir 12 pour le liquide à nébuliser.

Le système de nébulisation 10 pourra comporter une électronique de commande et de contrôle tel que des capteurs, des actionneurs, et/ou une interface homme-machine.

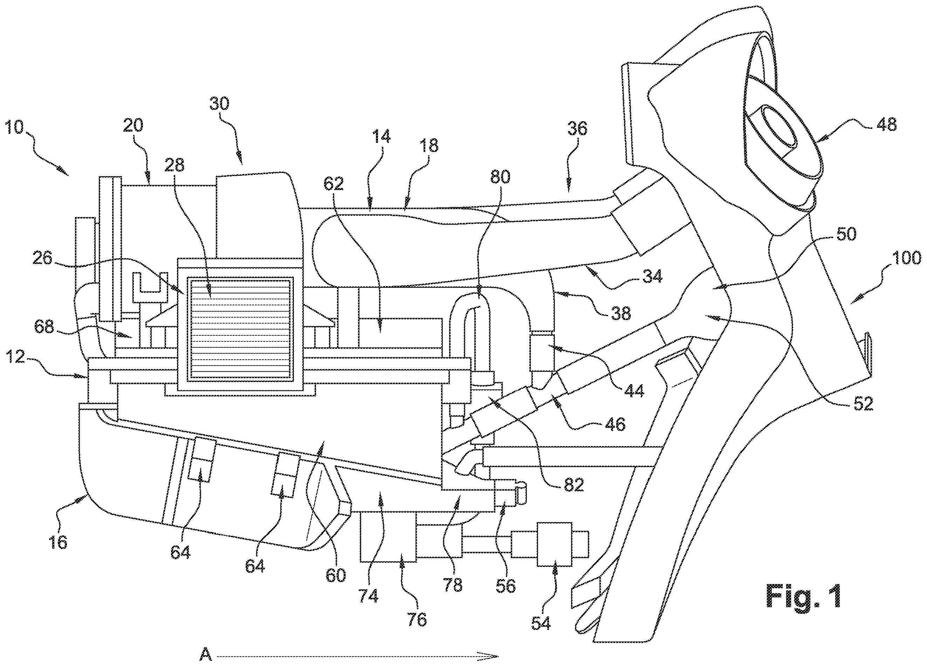

Le système de nébulisation 10 peut être intégré dans un véhicule automobile, par exemple dans une console centrale tel qu'illustrée en partie à la figure 1. En particulier, le système de nébulisation 10 pourra être disposé dans un logement situé au-dessus et/ou entre des conduits d'aération arrière et en dessous des accoudoirs de sièges avant.

## Revendications

1. Système de nébulisation (10) pour véhicule automobile comportant au moins :
- un réservoir (12) pour un liquide,
- une enceinte de nébulisation (14), ladite enceinte de nébulisation (14) comportant une buse de nébulisation (22) munie d'un dispositif d'émission d'ondes acoustiques configuré de sorte que ledit liquide issu dudit réservoir (12) pour le liquide forme un brouillard de gouttelettes dudit liquide, ledit brouillard étant destiné à pénétrer dans un habitacle du véhicule automobile, et,
- un système de filtration (16) apte à filtrer ledit liquide contenu dans ledit réservoir (12) pour le liquide avant son passage dans ladite enceinte de nébulisation (14)
**caractérisé en ce que** ledit système de nébulisation (10) comporte un module d'entrée (26) pour l'air, ledit module d'entrée (26) pour l'air comportant une volute d'injection d'air (30) apte à canaliser l'air en direction du volume intérieur de ladite enceinte de nébulisation (14), et ce que ladite volute d'injection d'air (30) présente une forme de spirale s'enroulant autour de ladite enceinte de nébulisation (14).

2. Système de nébulisation (10) pour véhicule automobile selon la revendication 1 dans lequel ladite volute d'injection d'air (30) est propre à être appliquée contre une ouverture de ladite enceinte de nébulisation (14).

3. Système de nébulisation (10) pour véhicule automobile la revendication 1 ou 2 dans lequel ledit module d'entrée (26) pour l'air est assujetti à ladite enceinte de nébulisation (14).

4. Système de nébulisation (10) pour véhicule automobile selon l'une des revendications précédentes dans lequel ledit module d'entrée (26) pour l'air comporte au moins un support pour un ventilateur de mise en mouvement de l'air.

5. Système de nébulisation (10) pour véhicule automobile selon l'une des revendications précédentes dans lequel ledit module d'entrée (26) pour l'air comporte un filtre (28) pour l'air.

6. Système de nébulisation (10) pour véhicule automobile selon l'une des revendications 4 ou 5 dans lequel ledit ventilateur et/ou ledit filtre (28) pour l'air sont disposés selon une direction d'extension perpendiculaire à un axe longitudinal (A) de ladite enceinte de nébulisation (14) et sur un coté du système de nébulisation (10).

7. Système de nébulisation (10) pour véhicule automobile selon l'une des revendications précédentes dans lequel ledit réservoir (12) pour le liquide comporte une forme permettant d'accueillir au moins en partie ledit module d'entrée (26) pour l'air.

## Patentansprüche

1. Zerstäubungsystem (10) für ein Kraftfahrzeug, aufweisend wenigstens:
- einen Vorratsbehälter (12) für eine Flüssigkeit,
- eine Zerstäubungseinhausung (14), wobei die Zerstäubungseinhausung (14) eine Zerstäubungsdüse (22) aufweist, die mit einer Vorrichtung zur Aussendung von akustischen Wellen versehen ist, die so ausgebildet ist, dass die Flüssigkeit aus dem Vorratsbehälter (12) für die Flüssigkeit einen Nebel aus Tröpfchen der Flüssigkeit bildet, wobei der Nebel dazu bestimmt ist, in einen Fahrgastraum des Kraftfahrzeugs einzudringen, und,
- ein Filterungssystem (16), das geeignet ist, die Flüssigkeit, die in dem Vorratsbehälter (12) für die Flüssigkeit enthalten ist, vor ihrem Eintritt in die Zerstäubungseinhausung (14) zu filtern
**dadurch gekennzeichnet, dass** das Zerstäubungsystem (10) ein Eintrittsmodul (26) für die Luft aufweist, wobei das Eintrittsmodul (26) für die Luft ein Lufteinspritz-Abdeckungsgehäuse (30) aufweist, das geeignet ist, die Luft in Richtung des Innenvolumens der Zerstäubungseinhausung (14) zu kanalisieren, und dadurch, dass das Lufteinspritz-Abdeckungsgehäuse (30) eine Form einer Spirale aufweist, die um das Lufteinspritz-Abdeckungsgehäuse (14) gewickelt ist.

2. Zerstäubungsystem (10) für ein Kraftfahrzeug nach Anspruch 1, wobei das Lufteinspritz-Abdeckungsgehäuse (30) geeignet ist, an einer Öffnung der Zerstäubungseinhausung (14) anzuliegen.

3. Zerstäubungsystem (10) für ein Kraftfahrzeug nach Anspruch 1 oder 2, wobei das Eintrittsmodul (26) für die Luft an die Zerstäubungseinhausung (14) angeschlossen ist.

4. Zerstäubungsystem (10) für ein Kraftfahrzeug nach einem der vorhergehenden Ansprüche, wobei das Eintrittsmodul (26) für die Luft mindestens einen Halter für einen Ventilator zum Inbewegungversetzen der Luft aufweist.

5. Zerstäubungsystem (10) für ein Kraftfahrzeug nach einem der vorhergehenden Ansprüche, wobei das Eintrittsmodul (26) für die Luft einen Filter (28) für die Luft aufweist.

6. Zerstäubungsystem (10) für ein Kraftfahrzeug nach einem der Ansprüche 4 oder 5, wobei der Ventilator und/oder der Filter (28) für die Luft in einer Erstreckungsrichtung senkrecht zu einer Längsachse (A) der Zerstäubungseinhausung (14) und auf einer Seite des Zerstäubungsystems (10) angeordnet sind.

7. Zerstäubungsystem (10) für ein Kraftfahrzeug nach einem der vorhergehenden Ansprüche, wobei der Vorratsbehälter (12) für die Flüssigkeit eine Form aufweist, die es gestattet, das Eintrittsmodul (26) für die Luft wenigstens teilweise aufzunehmen.

## Claims

1. Motor vehicle nebulizer system (10) comprising at least:
- a reservoir (12) for a liquid,
- a nebulizer enclosure (14), said nebulizer enclosure (14) having a nebulizer nozzle (22) provided with a device for emitting acoustic waves that is configured such that said liquid coming from said reservoir (12) for the liquid forms a mist of droplets of said liquid, said mist being intended to pass into the interior of the motor vehicle, and
- a filtration system (16) that is able to filter said liquid contained in said reservoir (12) for the liquid before it passes into said nebulizer enclosure (14),
**characterized in that** said nebulizer system (10) has an air inlet module (26), said air inlet module (26) having an air injection blower (30) that is able to channel the air in the direction of the interior volume of said nebulizer enclosure (14), and **in that** said air injection blower (30) has a spiral shape winding about said nebulizer enclosure (14).

2. Motor vehicle nebulizer system (10) according to Claim 1, wherein said air injection blower (30) is able to be placed against an opening of said nebulizer enclosure (14).

3. Motor vehicle nebulizer system (10) according to Claim 1 or 2, wherein said air inlet module (26) is secured to said nebulizer enclosure (14).

4. Motor vehicle nebulizer system (10) according to one of the preceding claims, wherein said air inlet module (26) has at least one support for a fan for setting the air in motion.

5. Motor vehicle nebulizer system (10) according to one of the preceding claims, wherein said air inlet module (26) has a filter (28) for the air.

6. Motor vehicle nebulizer system (10) according to either of Claims 4 and 5, wherein said fan and/or said filter (28) for the air are disposed in a direction of extension perpendicular to a longitudinal axis (A) of said nebulizer enclosure (14) and on one side of the nebulizer system (10).

7. Motor vehicle nebulizer system (10) according to one of the preceding claims, wherein said reservoir (12) for the liquid has a shape that makes it possible to at least partially accommodate said air inlet module (26).
